# EUROPEAN PATENT APPLICATION

(11) **EP 4 663 946 A1**
(43) Date of publication of application: **17.12.2025**
(21) Application number: 25170025.8
(22) Date of filing: 11.04.2025
(51) Int. Cl.: F03G 7/06, B64C 13/30

(54) **APPARATUSES AND METHODS FOR SHAPE-MEMORY ALLOYS AND SENSING**

(30) Priority: 12.06.2024 US 202418741224
(71) Applicant: The Boeing Company, Arlington, VA 22202 (US)
(72) Inventor: JONES, ZACHARY M., Arlington, 22202 (US); NICHOLSON, DOUGLAS E., Arlington, 22202 (US); CALKINS, FREDERICK T., Arlington, 22202 (US)
(74) Representative: Lissandrini, Marco

(57) **Abstract**

Aircraft assembly (100) comprising a sensor (144), a cable (134) connected to the sensor, and a shape-memory alloy (SMA) element (510) connected to the cable. The SMA element is configured to change shape and control tension in the cable.

A method (810) of using an aircraft assembly (100) by changing the shape of the SMA element by an amount corresponding to a change in a length of the cable.

## Description

### FIELD

The present disclosure relates to apparatuses and methods for shape-memory alloy elements and sensing.

### BACKGROUND

Aircraft use cable and sensor systems to determine the positions, for example control surfaces of a wing of the aircraft. However, factors such as thermal expansion may affect the length and/or tension of a cable when in use, which may cause a corresponding sensor to lose signal or generate an inaccurate signal. Therefore, there is a need for prevention of inaccurate or loss of signal in cable and sensor systems.

### SUMMARY

Apparatuses and methods for shape-memory alloy elements and sensing are disclosed. In some examples, an aircraft assembly comprises a sensor, a cable connected to the sensor, and a shape-memory alloy (SMA) element connected to the cable. The SMA element is configured to change shape and control tension in the cable.

In some examples, a method of using an aircraft assembly by changing the shape of the SMA element by an amount corresponding to a change in a length of the cable.

### BRIEF DESCRIPTION OF THE DRAWINGS

Fig. 1 is a perspective view of an example aircraft.
Fig. 2 is a schematic diagram of an aircraft assembly comprising control surfaces.
Fig. 3 is a further schematic diagram of an aircraft assembly comprising control surfaces.
Fig. 4 is a schematic diagram of a shape-memory alloy (SMA) element, sensor, and cable.
Fig. 5 is a further schematic diagram of a SMA element, sensor, and cable.
Fig. 6 is a further schematic diagram of a SMA element, sensor, and cable.
Fig. 7 is a further schematic diagram of a SMA element, sensor, and cable.
Fig. 8 is a flowchart schematically representing methods of changing length of an SMA element.

### DESCRIPTION

Apparatuses and methods for shape-memory alloy elements and sensing are disclosed. Generally, in the figures, elements that are likely to be included in a given example are illustrated in solid lines, while elements that are optional to a given example are illustrated in broken lines. However, elements that are illustrated in solid lines are not essential to all examples of the present disclosure, and an element shown in solid lines may be omitted from a particular example without departing from the scope of the present disclosure.

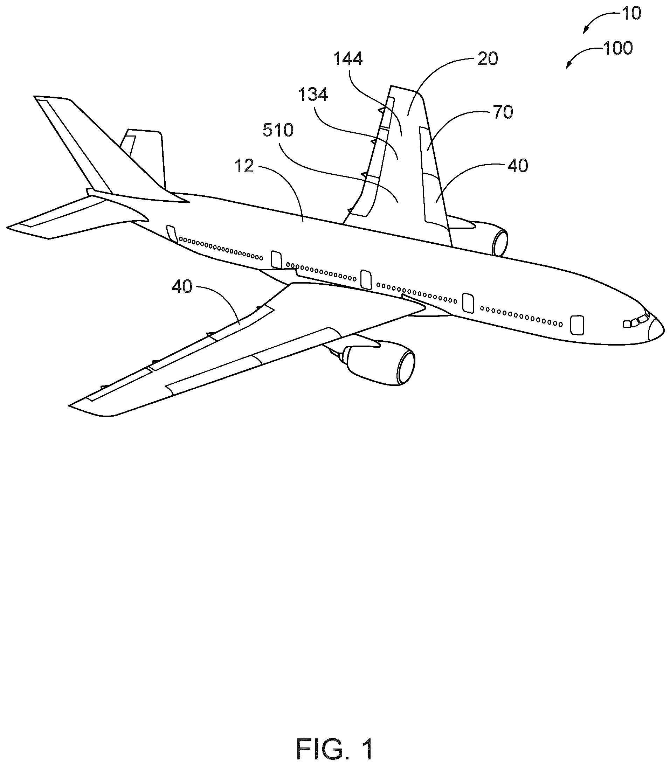

Aircraft use systems of sensors and cables, also referred to as lanyards, to determine the positions of control surfaces of a wing of the aircraft. Fig. 1 depicts an example of an aircraft assembly 100 as part of an aircraft 10. An example of an aircraft 10 comprises a fuselage 12 and a wing 20 supported by the fuselage 12. The example of Fig. 1 further depicts a sensor 144, a cable 134, and a shape-memory alloy (SMA) element 510 of the aircraft assembly 100 arranged within the wing 20.

The example of Fig. 1 further depicts the aircraft assembly 100 comprising control surfaces 40 on the wings 20. The control surfaces 40 may be positioned on a rear edge of the wing or on a leading edge 70 of the wing. The control surfaces 40 are used to control the shape of the wing, and thus, the control surfaces also affect characteristics of the wing such as lift and drag. Sensors and cables are often used to detect positions of the control surfaces of a wing.

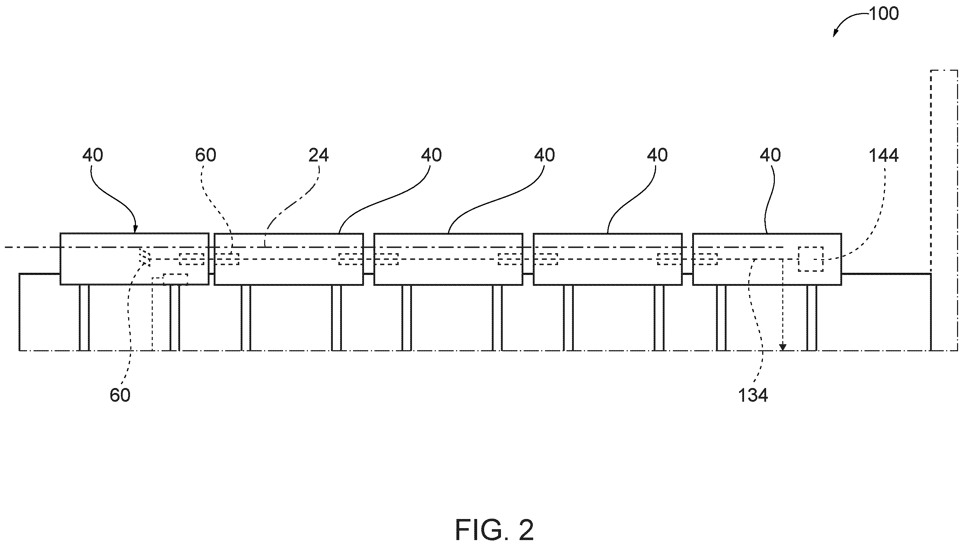

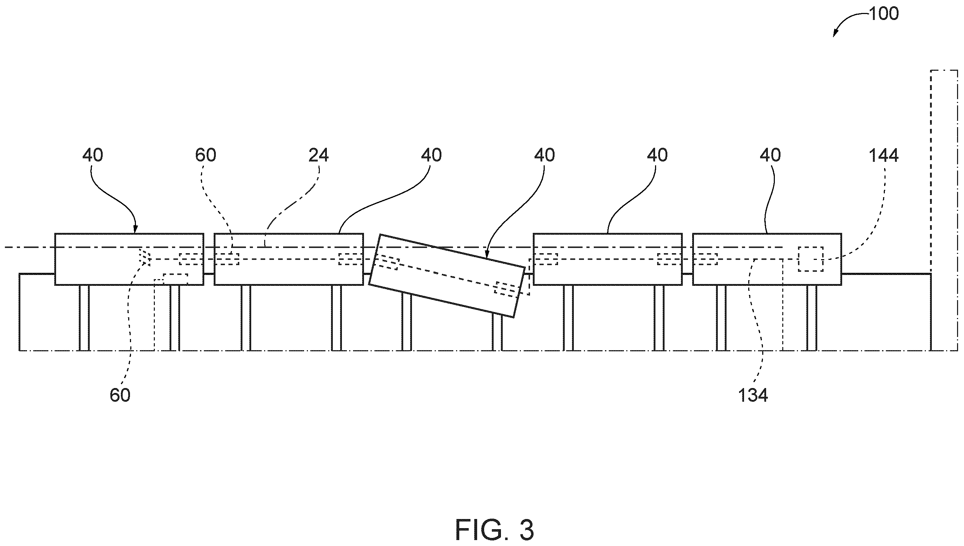

Figs 2 and 3 depict further examples of aircraft assemblies 100. In Figs 2 and 3, a control surface 40 is connected to the cable 134 and a sensor 144 is connected to the cable 134. The sensor 144 is configured to detect a displacement of the cable 134 as a skew angle of the control surface 40. An example of a skew angle is a deviation of a portion of the control surface 40 from a target position. The skew angle may be determined relative to a control surface axis 24. A skew angle may be indicative of a control surface 40 which is not in a target position and, therefore, having reduced performance. Fig. 2 depicts an example of a control surface 40 in a target position. Fig. 3 depicts an example of a control surface 40 outside of a target position.

Cables are used to operatively connect structures within an aircraft assembly. In one example, a cable 134 connects a control surface 40 of an aircraft 10 to a sensor 144. Thus, in this example the cable 134 allows for the sensor 144 to detect a skew angle.

Cables may be comprised of many types of materials such as steel, corrosion resistant steel, aluminum, metals, or composites. Furthermore, cables may have be treated such as by galvanizing, anodizing, plating, jacketing or coating with materials such as polymers. Furthermore, solid components such as rods may operatively connect components within aircraft assemblies such as sensors and control surfaces.

Sensors are used to detect displacement of structures within an aircraft assembly. In one example, sensor 144 comprises a magnet and hall effect sensor. Other examples of sensor 144 comprise one or more of a rotary variable displacement sensor and a linear variable displacement sensor. Still further examples of sensor 144 comprise a piston connected to a cable. In this example, the piston moved within a housing which comprises springs that the piston presses against. The sensor may detect displacement of the piston via a laser or capacitance. The sensor may also detect a motive force of the piston. Other sensors are also possible such as optical sensors, strain sensors, and capacitive sensors.

In further examples, sensor 144 detects an electrical impedance of one or more of cable 134 and SMA element 510. Examples of the detected impedance are used to determine a length of one or more of cable 134 and SMA element 510. Some examples use the detected impedance to determine when active control of the SMA element 510 via a heater 520 or an electrical power supply 520 is to be used. Other examples use the detected impedance and the determined length of the cable 134 to determine a skew angle of the control surfaces 40.

Sensors 144 may be connected to control surfaces 40 by a cable 134 to detect displacement of the cable 134. Displacement of the cable 134 may indicate a displacement of the control surfaces 40. However, other factors may cause displacement of the cable 134 and as such, may reduce accuracy of the output of the sensors 144. For example, if a cable 134 expands due to thermal expansion, the sensor 144 may detect a displacement of the cable even if the control surface 40 is in the target position. The sensor 144 detecting displacement of the cable when a control surface 40 is in the target position may lead to a false indication of a skew angle. In an alternative example, the thermal expansion of a cable 134 may cause the tension in the cable to fall below a minimum threshold detectable by the sensor 144. In such an example, the sensor 144 would not detect displacement of the cable 134, and therefore the control surface 40, even if the control surface 40 is not in the target position.

Shape-memory alloy (SMA) elements 510 can be used to prevent inaccurate signals or loss of signal from a sensor 144. In an example of cable displacement, one or more SMA elements 510 may be used to offset a particular displacement of a cable and prevent a false indication of skew angle. For example, displacement of a cable 134 caused by thermal expansion at a particular temperature may be offset by a change in shape of an SMA element 510. Thus, in this example, the displacement of the cable 134 due to thermal expansion detected by the sensor 144 may be reduced. According to the present disclosure, the expression "change in shape" may include elongation or contraction of the SMA element. In another example, the expression "change in shape" may include the SMA element offsetting a displacement of the cable by coiling into a spiral to shorten and then extending to lengthen. In another example, the expression "change in shape" may include the SMA element assuming a zig-zag configuration that extends or compresses in response to length variations. In another example, the expression "change in shape" may involve an undulated shape that stretches or contracts similar to a spring.

In a further example where thermal expansion causes tension in the cable to fall below a minimum threshold detectable by the sensor144, a SMA element 510 may increase the tension in the cable by changing shape and thus maintain a required amount of tension for the sensor 144 to sense displacement of the control surface 40.

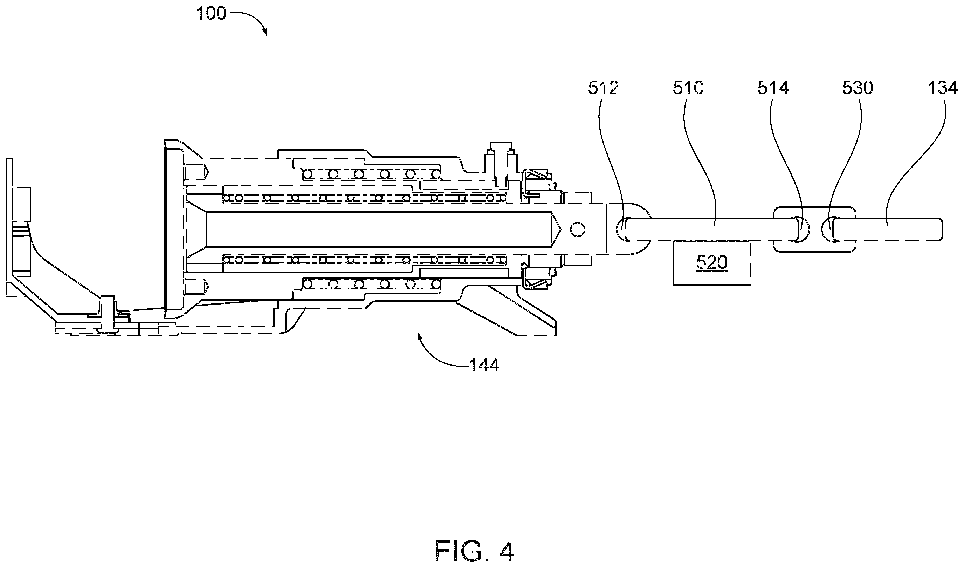

Fig. 4 schematically illustrates an aircraft assembly 100 comprising a sensor 144, a cable 134 connected to the sensor 144, and a SMA element 510 connected to the cable 134. The SMA element 510 is configured to change shape and control tension in the cable 134. The exemplary SMA element 510 of Fig. 4 is positioned between the cable 134 and the sensor 144. More specifically, the cable 134 comprises a terminal end 530 and the SMA element 510 is arranged between the terminal end 530 of the cable 134 and the sensor 144. More specifically, a first end 512 of the SMA element 510 is connected to the sensor 144 and a second end 514 of the SMA element 510 is connected to the cable 134.

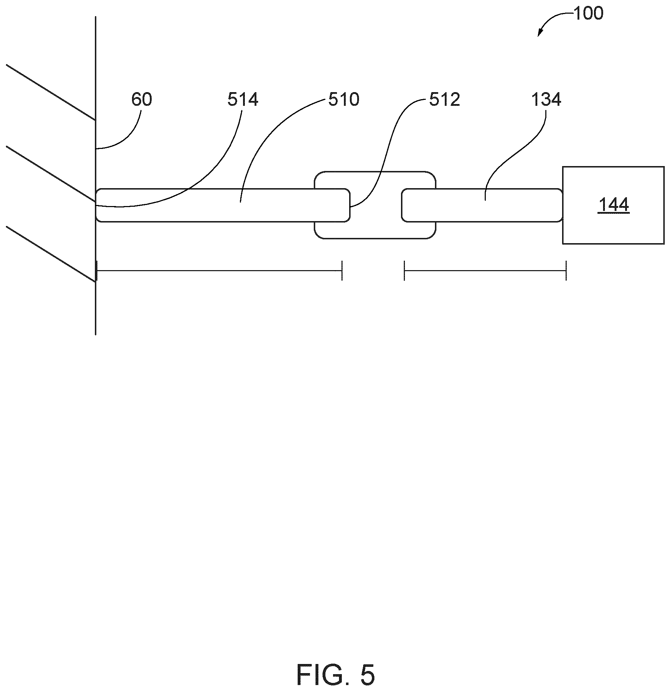

In further examples, the SMA element 510 or the cable 134 may be connected to an anchor 60. Fig. 5 illustrates an aircraft assembly 100 with a cable 134 connected to a sensor 144 and a SMA element 510 connected to an anchor 60. More specifically, the SMA element 510 comprises a first end 512 and a second end 514. The first end 512 of the SMA element 510 is connected to the cable 134, and the second end 514 of the SMA element 510 is connected to the anchor 60.

A position of the SMA element 510 enables the SMA element 510 to offset a change in length of the cable 134 or control tension of the cable 134. In the example depicted in Fig. 4, the SMA element 510 is positioned between the cable 134 and the sensor 144. However, in other examples, such as depicted in Fig. 5, the SMA element 510 may be positioned between the anchor 60 and the cable 134. In each case, the SMA element 510 is positioned to offset a change in length of the cable 134 or control tension in the cable 134.

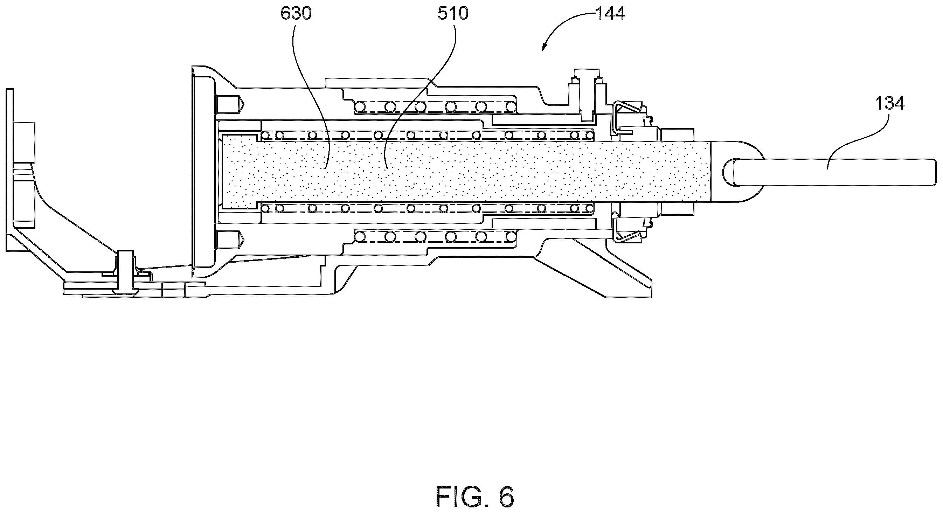

In further examples, the SMA element 510 may be arranged at other positions. For example, Fig. 6 depicts an example where the sensor 144 comprises a piston 630, and the piston 630 comprises the SMA element 510. Thus, in this example, the SMA element 510 may change shape, such as length, to offset a change in length of the cable 134 or control tension in the cable 134.

SMA elements 510 may vary in configuration and composition. Examples of a SMA element 510 may include a rod, a prism, a coil, a helical coil, a tube, a washer, a wire, a disc spring, a plate, a ribbon, an SMA cable, or a beam.

SMA elements can change phase and crystal structure. The change in phase and crystal structure may cause a change in the shape of the SMA element. SMA elements can undergo phase transformation and change in shape in response to temperature, applied load, or stress. Furthermore, these phase transformations and changes in shape often are reversible.

The composition of the SMA element influences the phase change properties of the SMA element. One common composition for SMA elements 510 is nickel titanium based alloys (which also may be referred to as a NiTi alloy or nitinol). NiTi alloys have four temperatures associated with phase transformation: martensite start (T_{MS}), martensite finish (T_{MF}), austenite start (T_{AS}) and austenite finish (T_{AF}). The transformation temperatures can be adjusted through composition and processing. For example, NiTi alloys with 54,5-57,0 weight percent nickel and a titanium balance often exhibit an austenite finish temperature in a range of 0-30°C. In further examples, ternary alloying elements are added to a base NiTi alloy to control the temperatures at which phase transformation of an SMA element 510 occurs. For example, a SMA element 510 comprised of a NiTi alloy may further comprise at least one of iron (Fe), niobium (Nb), hafnium (Hf), zirconium (Zr), platinum (Pt), palladium (Pd), and/or copper (Cu).

Further examples of SMA elements 510 comprise copper (Cu) alloys. One example of a copper alloy of SMA elements 510 is copper-zinc-aluminum (Cu-Zn-Al). Another example of a copper alloy of SMA elements 510 is copper-aluminum-nickel (Cu-Al-Ni). Examples of copper alloys of SMA elements 510 also include ternary alloying elements such as Manganese (Mn), Zirconium (Zr), and others.

Aircraft assemblies 100 may use the phase transformation and change in shape of SMA elements 510 to offset displacement of cables 134 or maintain a tension in the cables 134. For example, a change in shape of the SMA element 510 may be a change in length of the SMA element 510, which may compensate for a change in length or tension of the cable 134 due to thermal expansion. In another example, the SMA element 510 is configured to undergo a phase transformation in response to a change in temperature or load to change shape to compensate for a corresponding change in the length or tension of the cable 134. In a further example, the cable 134 may change in length due to thermal expansion at a target temperature, and the change in shape of the SMA element 510 corresponds to the change in length or tension of the cable 134. Thus, the changes in length and/or tension of the cable 134 caused by thermal expansion of cable 134 may be offset at the target temperature by a change in shape of an SMA element 510 at the target temperature.

SMA elements 510 may undergo phase transformation and change shape at multiple temperatures. One example of a SMA element 510 is configured to undergo a phase transformation in response to an ambient temperature to change shape. In another example, and as illustrated in Fig. 4, the SMA element 510 is configured to undergo a phase transformation in response to an input from a heater 520 or an electrical power supply 520 to change shape. According to one example, such input is a thermal input. Examples of heater 520 include induction heating units. In another further example, the SMA element 510 undergoes a first phase transformation in response to an ambient temperature change within an ambient temperature range, and then the SMA element 510 undergoes a second phase transformation at a second temperature. In such examples, the SMA element 510 changes shape during each of the first and the second phase transformations. Further exemplary SMA elements 510 may undergo the second phase transformation in response to an input from a heater 520 or an electrical power supply 520 at a second temperature.

Depending on the application, a SMA element 510 can be tailored to undergo phase transformations at specific desired temperatures. For example, an SMA element 510 may be configured to undergo a phase transformation at a threshold temperature within a range of -100 °C to 200 °C to change shape. In further examples, such as in commercial aeronautical applications, a SMA element 510 undergoes one or more phase transformations in a range of -50 °C to 50 °C. In a different example, which could be used for high-lift applications such as takeoff of an aircraft, a SMA element 510 undergoes one or more phase transformations in a range of 0 °C to 30°C.

SMA elements 510 may be further specifically tuned. For example, a SMA element may be tuned for use in a superelastic response in which the change in shape of the SMA element 510 is in response to a stress and a temperature of the SMA element is greater than an austenite finish temperature.

SMA elements 510 may be further actively tuned using applied heat, stress, or electricity. For example, a heater 520 or an electrical power supply 520 may supply heat or electricity to the SMA element 510 to selectively change the spring rate of the SMA element 510, such as to increase the spring rate to prevent loss of tension in the cable 134.

Furthermore, the shape and composition of the SMA elements 510 can be chosen for the needs of a specific application. For example, a cable 134 of a given composition and length may undergo specific thermal expansion during a duty cycle. In one example, the change in shape of the SMA element 510 is based on a change in length of the cable 134. The change in length of the cable may be estimated as the thermal expansion of the cable at a target temperature.

Phase transformations of SMA elements 510 can be utilized for multiple functions. In one example, a change in shape of the SMA element 510 offsets the change in length of the cable 134. In exemplary applications where a sensor 144 is configured to generate a skew angle signal in response to displacement of the cable 134, the change in shape of the SMA element 510 offsets the change in length of the cable 134 and thus prevents the sensor 144 from generating the skew angle signal. In further examples, a sum of the change in shape of the SMA element 510 and the change in length of the cable 134 is approximately zero.

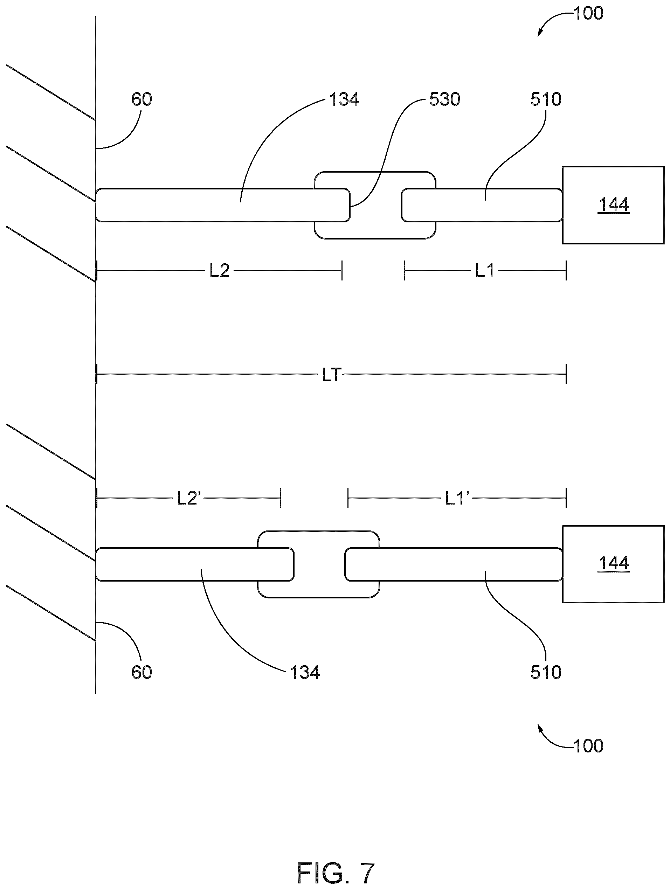

Fig. 7 depicts an example of a SMA element 510 changing shape. The top portion of Fig. 7 depicts an aircraft assembly 100 at a first temperature where the SMA element 510 has a length L1 and cable 134 has a length L2. The bottom portion of Fig. 7 depicts an aircraft assembly 100 at a second temperature where the SMA element 510 has a length L1' and the cable 134 has a length L2'. Fig. 7 further depicts that a total length (LT) between the anchor 60 and the sensor 144 is approximately the same at the first temperature and the second temperature. Thus, in this example, the change in the length L1, L1' of the SMA element 510 offsets the change in length L2, L2' of the cable 134.

Phase transformations and changes in shape of SMA elements 510 are also utilized to control tension in a cable 134. For example, the change in shape of the SMA element 510 comprises increasing, decreasing, and or maintaining the tension in the cable 134. In further examples, the change in shape of the SMA element 510 offsets a loss of tension in the cable 134. Examples of the change in shape of the SMA element 510 further comprise applying a force against the cable 134.

Applying tension to the cable 134 may involve use of a superelastic effect of a SMA element 510. Superelasticity , sometimes called pseudoelasticity, is an elastic response to an applied stress caused by a phase transformation between the austenitic and martensitic phases of a crystal. For example, the SMA element 510 may undergo a phase transformation in response to a stress or lack of stress applied to the SMA element 510 by the cable 134. This stress-induced phase transformation may be used to control tension in the cable. In one example, the SMA element 510 undergoes a phase transformation and increases tension in the cable 134 in response to a decrease in stress applied to the SMA element 510 by the cable.

In a more specific example, a sensor 144 is configured to detect displacement of a cable 134 as a skew angle of a control surface 40 of an aircraft assembly 100. A change in shape of a SMA element 510 in the aircraft assembly 100 offsets a loss of tension in the cable 134 and prevents the sensor from generating a slack signal in response to the loss of tension.

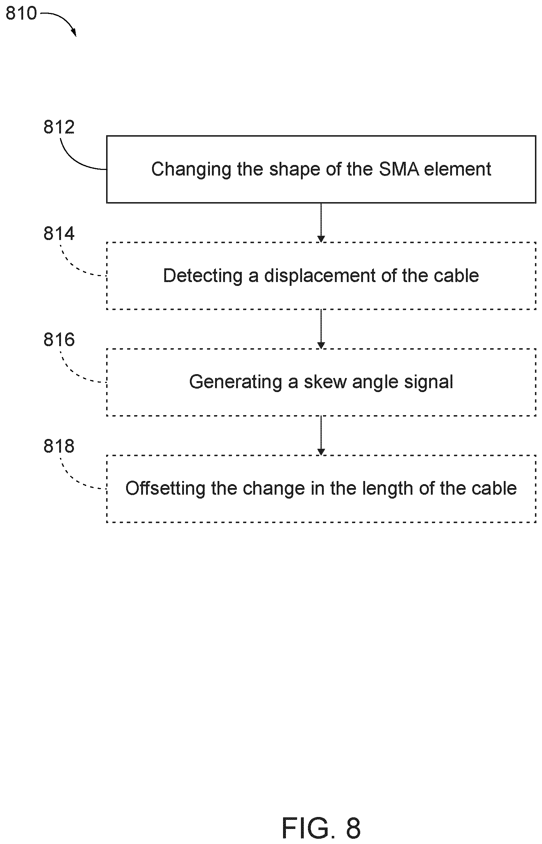

Fig. 8 schematically provides a flowchart that represents illustrative, non-exclusive examples of methods 810 according to the present disclosure. In Fig. 8, some steps are illustrated in dashed boxes indicating that such steps may be optional or may correspond to an optional version of a method according to the present disclosure. That said, not all methods according to the present disclosure are required to include the steps illustrated in solid boxes. The methods and steps illustrated in Fig. 8 are not limiting and other methods and steps are within the scope of the present disclosure, including methods having greater than or fewer than the number of steps illustrated, as understood from the discussions herein.

Fig. 8 schematically depicts a method comprising changing 812 the shape of the SMA element 510 by an amount corresponding to a change in a length of the cable 134. Further examples of methods 810 include detecting 814 displacement of the cable 134 with the sensor 144, generating 816 a skew angle signal in response to displacement of the cable 134, and offsetting 818 the change in the length of the cable 134 via the change in the shape of the SMA element 510 such that the skew angle signal is not generated. Further examples of methods comprise using an aircraft assembly 100 by changing 812 the shape of the SMA element 510 by an amount corresponding to a change in a length of the cable 134.

Illustrative, non-exclusive examples of inventive subject matter according to the present disclosure are described in the following enumerated paragraphs:
A. An aircraft assembly (100) comprising:
   a sensor (144);
   a cable (134) connected to the sensor (144); and
   a shape-memory alloy (SMA) element (510) connected to the cable (134), wherein the SMA element (510) is configured to change shape and control tension in the cable (134).

   A1. The aircraft assembly (100) of paragraph A, wherein the SMA element (510) is configured to undergo a phase transformation in response to temperature or load to change shape.
   A1.1. The aircraft assembly (100) of paragraph A, wherein the SMA element (510) is configured to undergo a phase transformation in response to an ambient temperature to change shape.
   A1.2. The aircraft assembly (100) of paragraph A, wherein the SMA element (510) is configured to undergo a phase transformation in response to an input from a heater (520) or an electrical power supply (520) to change shape.
   A1.3 The aircraft assembly (100) of paragraph A, wherein the SMA element (510) is configured to undergo a first phase transformation in response to an ambient temperature within an ambient temperature range, and wherein the SMA element (510) is configured to change shape during the first phase transformation, and
      wherein the SMA element (510) is configured to undergo a second phase transformation in response to an input from a heater (520) or an electrical power supply (520) at a second temperature, and wherein the SMA element (510) is configured to change shape during the second phase transformation.
   A1.4 The aircraft assembly (100) of paragraph A, wherein the SMA element (510) is configured to undergo a phase transformation at a threshold temperature within a range of -100 °C to 200 °C to change shape.
   A1.5 The aircraft assembly (100) of paragraph A, wherein the SMA element (510) is configured to undergo a first phase transformation at a first temperature, and wherein the SMA element (510) is configured to change shape during the first phase transformation, and
      wherein the SMA element (510) is configured to undergo a second phase transformation at a second temperature, and wherein the SMA element (510) is configured to change shape during the second phase transformation.
   A1.6 The aircraft assembly (100) of any of paragraphs A-A1.5, wherein the change in shape of the SMA element (510) is in response to a stress and with a temperature of the SMA element (510) being greater than an austenite finish temperature.
   A2. The aircraft assembly (100) of any of paragraphs A-A1.6, wherein the cable (134) is configured to change in length due to thermal expansion at a target temperature, and wherein the change in shape of the SMA element (510) corresponds to the change in length of the cable (134).
   A2.1 The aircraft assembly (100) of paragraph A2, wherein the change in shape of the SMA element (510) offsets the change in length of the cable (134).
   A2.1.1 The aircraft assembly (100) of paragraph A2.1, wherein the sensor (144) is configured to generate a skew angle signal in response to displacement of the cable (134), and wherein the change in shape of the SMA element (510) offsetting the change in length of the cable (134) prevents the sensor (144) from generating the skew angle signal.
   A2.1.1.1 The aircraft assembly (100) of paragraph A2.1.1, wherein a sum of the change in shape of the SMA element (510) and the change in length of the cable (134) is approximately zero.
   A2.2 The aircraft assembly (100) of paragraph A2, wherein the change in shape of the SMA element (510) offsets a loss of tension in the cable (134).
   A3. The aircraft assembly (100) of any of paragraphs A-A2.2, wherein the change in shape of the SMA element (510) comprises a change in length of the SMA element (510).
   A4. The aircraft assembly (100) of paragraph A-A3, wherein the change in shape of the SMA element (510) comprises increasing, decreasing, and or maintaining tension in the cable (134).
   A5. The aircraft assembly (100) of any of paragraphs A-A4, wherein the change in shape of the SMA element (510) comprises applying a force against the cable (134).
   A6. The aircraft assembly (100) of any of paragraphs A-A5, wherein the aircraft assembly (100) comprises a wing (20), and wherein the sensor (144), the cable (134), and the SMA element (510) are arranged within the wing (20).
   A7. The aircraft assembly (100) of any of paragraphs A-A6, wherein the aircraft assembly (100) comprises a control surface (40) connected to the cable (134); and
      wherein the sensor (144) is configured to detect a/the displacement of the cable (134) as a skew angle of the control surface (40).
   A7.1 The aircraft assembly (100) of paragraph A7, wherein the skew angle is a deviation of a portion of the control surface (40) from a target position.
   A8. The aircraft assembly (100) of any of paragraphs A-A7.1, wherein the aircraft assembly (100) comprises a/the wing (20), and wherein the wing (20) comprises a leading edge (70) and a/the control surface (40), and wherein the control surface (40) is positioned on the leading edge (70) of the wing (20).
   A9. The aircraft assembly (100) of any of paragraphs A-A8, wherein the change in shape of the SMA element (510) is based on a change in length of the cable (134).
   A10. The aircraft assembly (100) of any of paragraphs A-A9, wherein the aircraft assembly (100) comprises a/the wing (20), wherein the wing (20) comprises a/the leading edge (70) and a/the control surface (40), wherein the control surface (40) is positioned on the leading edge (70) of the wing (20) and is connected to the cable (134), and wherein the sensor (144) detects a/the displacement of the cable (134) as a/the skew angle of the control surface (40).
   A11. The aircraft assembly (100) of any of paragraphs A-A10, wherein the cable (134) comprises a terminal end (530), and wherein the SMA element (510) is arranged between the terminal end (530) of the cable (134) and the sensor (144).
   A12. The aircraft assembly (100) of any of paragraphs A-A11, wherein the aircraft assembly (100) comprises an anchor (60), wherein the SMA element (510) comprises a first end (512) and a second end (514), wherein the first end (512) of the SMA element (510) is connected to the cable (134), and wherein the second end (514) of the SMA element (510) is connected to the anchor (60).
   A13. The aircraft assembly (100) of any of paragraphs A-A12, wherein the sensor (144) comprises a piston (630), and wherein the piston (630) comprises the SMA element (510).
   A14. The aircraft assembly (100) of any of paragraphs A-A13, wherein the SMA element (510) comprises a rod, a prism, a coil, a helical coil, a tube, a washer, a wire, an SMA cable, or a beam.
   A15. The aircraft assembly (100) of any of paragraphs A-A14, wherein the SMA element (510) is comprised of a nickel titanium (NiTi) alloy.
   A15.1 The aircraft assembly (100) of paragraph A15, wherein the SMA element (510) is further comprised of at least one of: iron (Fe), niobium (Nb), hafnium (Hf), zirconium (Zr), platinum (Pt), palladium (Pd), and/or copper (Cu).
   A16. The aircraft assembly (100) of any of paragraphs A-A15.1, wherein the aircraft assembly (100) comprises a/the control surface (40) connected to the cable (134), and
      wherein the sensor (144) is configured to detect a/the displacement of the cable (134) as a/the skew angle of the control surface (40),
      wherein a/the change in shape of the SMA element (510) offsets a loss of tension in the cable (134) and prevents the sensor (144) from generating a slack signal in response to the loss of tension.
B. An aircraft (10) comprising:
   a fuselage (12);
   a wing (20) supported by the fuselage (12); and
   the aircraft assembly (100) of any of paragraphs A-A16 operatively coupled to the wing (20).
C. A method (810) of using the aircraft assembly (100) of any of paragraphs A-A16, the method (810) comprising:
   changing (812) the shape of the SMA element (510) by an amount corresponding to a/the change in a/the length of the cable (134).
   C1. The method (810) of paragraph C, further comprising:
      detecting (814) displacement of the cable (134) with the sensor (144);
      generating (816) a/the skew angle signal in response to displacement of the cable (134);
      offsetting (818) the change in the length of the cable (134) via the change in the shape of the SMA element (510) such that the skew angle signal is not generated.

As used herein, the terms "adapted" and "configured" mean that the element, component, or other subject matter is designed and/or intended to perform a given function. Thus, the use of the terms "adapted" and "configured" should not be construed to mean that a given element, component, or other subject matter is simply "capable of" performing a given function but that the element, component, and/or other subject matter is specifically selected, created, implemented, utilized, programmed, and/or designed for the purpose of performing the function. It is also within the scope of the present disclosure that elements, components, and/or other recited subject matter that is recited as being adapted to perform a particular function may additionally or alternatively be described as being configured to perform that function, and vice versa. Similarly, subject matter that is recited as being configured to perform a particular function may additionally or alternatively be described as being operative to perform that function.

As used herein, the term "and/or" placed between a first entity and a second entity means one of (1) the first entity, (2) the second entity, and (3) the first entity and the second entity. Multiple entries listed with "and/or" should be construed in the same manner, i.e., "one or more" of the entities so conjoined. Other entities optionally may be present other than the entities specifically identified by the "and/or" clause, whether related or unrelated to those entities specifically identified. Thus, as a nonlimiting example, a reference to "A and/or B," when used in conjunction with open-ended language such as "comprising," may refer, in one example, to A only (optionally including entities other than B); in another example, to B only (optionally including entities other than A); in yet another example, to both A and B (optionally including other entities). These entities may refer to elements, actions, structures, steps, operations, values, and the like.

As used herein, "approximate," when modifying a degree or relationship, may include not only the recited "approximate" degree or relationship, but also the full extent of the recited degree or relationship. For example, approximately may include a margin of 25% greater and less than a stated value or relationship. An approximate amount of a recited degree or relationship may include at least 75% of the recited degree or relationship. For example, an object that is at least approximately formed from a material includes objects for which at least 75% of the objects are formed from the material and also includes objects that are completely formed from the material. As another example, a first length that is at least approximately as long as a second length includes first lengths that are within 75% of the second length and also includes first lengths that are as long as the second length. As another example, a first component being approximately planar includes components with 25% or less deviation from a plane.

The various disclosed elements of apparatuses and steps of methods disclosed herein are not required to all apparatuses and methods according to the present disclosure, and the present disclosure includes all novel and non-obvious combinations and subcombinations of the various elements and steps disclosed herein. Moreover, one or more of the various elements and steps disclosed herein may define independent inventive subject matter that is separate and apart from the whole of a disclosed apparatus or method. Accordingly, such inventive subject matter is not required to be associated with the specific apparatuses and methods that are expressly disclosed herein, and such inventive subject matter may find utility in apparatuses and/or methods that are not expressly disclosed herein.

## Claims

1. An aircraft assembly (100) comprising:
a sensor (144);
a cable (134) connected to the sensor (144); and
a shape-memory alloy (SMA) element (510) connected to the cable (134), wherein the SMA element (510) is configured to change shape and control tension in the cable (134).

2. The aircraft assembly (100) of claim 1, wherein the SMA element (510) is configured to undergo a phase transformation in response to temperature or applied load to change shape.

3. The aircraft assembly (100) of claim 1, wherein the SMA element (510) is configured to undergo a phase transformation in response to an input from a heater (520) or an electrical power supply (520) to change shape.

4. The aircraft assembly (100) of claim 1 or 3, wherein the SMA element (510) is configured to undergo a phase transformation at a threshold temperature within a range of -100 °C to 200 °C to change shape.

5. The aircraft assembly (100) of any one of claims 1, 3 or 4 wherein the SMA element (510) is configured to undergo a first phase transformation at a first temperature, preferably at an ambient temperature within an ambient temperature range, and wherein the SMA element (510) is configured to change shape during the first phase transformation, and
wherein the SMA element (510) is configured to undergo a second phase transformation at a second temperature, preferably in response to an input from a heater (520) or an electrical power supply (520), and wherein the SMA element (510) is configured to change shape during the second phase transformation.

6. The aircraft assembly (100) of claim 1, wherein the change in shape of the SMA element (510) is in response to a stress and with a temperature of the SMA element being greater than an austenite finish temperature.

7. The aircraft assembly (100) of any one of claims 1 or 3 to 6, wherein the cable (134) is configured to change in length due to thermal expansion at a target temperature, and wherein the change in shape of the SMA element (510) corresponds to and offsets the change in length of the cable (134).

8. The aircraft assembly (100) of any one of claims 1 to 6, wherein the change in shape of the SMA element (510) offsets a loss of tension in the cable (134).

9. The aircraft assembly (100) of any one of claims 1 to 7, wherein the change in shape of the SMA element (510) is configured to increase, decrease, and/or maintain the tension in the cable (134).

10. The aircraft assembly (100) of any one of claims 1 to 9, wherein the SMA element (510) is comprised of a nickel titanium (NiTi) alloy and at least one of: iron (Fe), niobium (Nb), hafnium (Hf), zirconium (Zr), platinum (Pt), palladium (Pd), and/or copper (Cu).

11. An aircraft (10) comprising:
a fuselage (12);
a wing (20) supported by the fuselage (12); and
an aircraft assembly (100) according to any one of claims 1 to 10.

12. The aircraft (10) of claim 11, wherein the wing (20) comprises a control surface (40) connected to the cable (134), and wherein the sensor (144) is configured to generate a skew angle signal in response to displacement of the cable (134) as a skew angle of the control surface (40), and wherein the change in shape of the SMA element (510) offsetting the change in length of the cable (134) prevents the sensor (144) from generating the skew angle signal.

13. The aircraft (10) of claim 11, wherein the wing (20) comprises a control surface (40) connected to the cable (134), and
wherein the sensor (144) is configured to generate a skew angle signal in response to displacement of the cable (134) as a skew angle of the control surface (40), wherein the skew angle is a deviation of a portion of the control surface (40) from a target position, wherein a change in shape of the SMA element (510) offsets a loss of tension in the cable (134) and prevents the sensor (144) from generating a slack signal in response to the loss of tension.

14. The aircraft (10) of claim 10, wherein the aircraft (10) comprises an anchor (60), wherein the SMA element (510) comprises a first end (512) and a second end (514), wherein the first end (512) of the SMA element (510) is connected to the cable (134), and wherein the second end (514) of the SMA element (510) is connected to the anchor (60).

15. A method (810) of using the aircraft assembly (100) of any one of claims 1 to 10, the method (810): comprising:
detecting (814) a displacement of the cable (134) with the sensor (144);
generating (816) a skew angle signal in response to displacement of the cable (134) as a skew angle of a control surface (40) of a wing (20) of the aircraft (10); and
offsetting (818) the change in the length of the cable (134) via the change in the shape of the SMA element (510) such that the skew angle signal is not generated.
